Europäisches Patentamt

European Patent Office

Office européen des brevets

(11) Veröffentlichungsnummer: **0 326 984**

**A2**

## (12) EUROPÄISCHE PATENTANMELDUNG

(21) Anmeldenummer: 89101532.3

(22) Anmeldetag: 30.01.89

(51) Int. Cl.⁴: **C08G 18/28 , C08G 18/67 , C08G 18/81 , C08L 75/04 , C09D 7/14**

(30) Priorität: 03.02.88 AT 213/88
27.12.88 AT 3161/88

(43) Veröffentlichungstag der Anmeldung:
09.08.89 Patentblatt 89/32

(84) Benannte Vertragsstaaten:
CH DE ES FR GB IT LI NL

(71) Anmelder: VIANOVA KUNSTHARZ AKTIENGESELLSCHAFT
Postfach 191 Leechgasse 21
A-8011 Graz(AT)

(72) Erfinder: Rauch-Puntigam, Harald, Dr.
Hochsteingasse 21
A-8010 Graz(AT)
Erfinder: Morre, Peter
Triesterstrasse 125
A-8073 Feldkirchen(AT)
Erfinder: Tümmler, Peter, Dr.
Grillparzerstrasse 6
A-8010 Graz(AT)

(54) **Polymere Netzmittel, Verfahren zu ihrer Herstellung und ihre Verwendung in Pigmentzubereitungen für Lacke.**

(57) Die Erfindung betrifft polymere Netzmittel auf der Basis von Urethangruppen und gegebenenfalls Harnstoffgruppen aufweisenden Acrylpolymeren, das Verfahren zu ihrer Herstellung sowie ihre Verwendung in Pigmentzubereitungen für Lacke. Die Netzmittel eignen sich im besonderen zur optimalen Dispergierung von organischen Farbstoffen und Pigmenten in lösungsmittelhaltigen Lakken und Farben.

Die entsprechenden Urethan- bzw. Harnstoffgruppen in den Polymeren werden durch Copolymerisation von Hydroxyalkylacrylat und Monohydroxyl- bzw. Amin- blockierten Diisocyanaten oder durch Umsetzung von Hydroxylgruppen tragenden Acrylcopolymeren mit Monohydroxyl- bzw. Amin-halbblockierten Diisocyanaten erhalten.

EP 0 326 984 A2

# Polymere Netzmittel, Verfahren zu ihrer Herstellung und ihre Verwendung in Pigmentzubereitungen für Lacke.

Die Erfindung betrifft polymere Netzmittel auf der Basis von Urethangruppen und gegebenenfalls Harnstoffgruppen aufweisenden Acrylpolymeren, das Verfahren zu ihrer Herstellung sowie ihre Verwendung in Pigmentzubereitungen für Lacke. Die Netzmittel eignen sich im besonderen zur optimalen Dispergierung von organischen Farbstoffen und Pigmenten in lösungsmittelhaltigen Lakken und Farben.

Eine Reihe von wichtigen Lackfilmeigenschaften sind abhängig von einer guten Benetzung der Pigmente durch die gelösten Bindemittel. Es werden daher in der Literatur eine Reihe von Zusatzstoffen empfohlen, die u. a. neben Glanzverhalten und Farbstärke der Filme auch die Flockungsbeständigkeit und das rheologische Verhalten der Lacke positiv beeinflussen.

So ist es aus der DE-A-34 46 084 bekannt, für diesen Zweck Additionsverbindungen aus polyfunktionellen Isocyanaten, Polyethylenglykol und Dialkylethanolaminen einzusetzen. Auch in der EP-A1-0 154 678 werden Hilfsmittel für die Dispergierung von Feststoffen, wie Pigmenten, beschrieben, welche durch Umsetzung von Polyisocyanaten mit Mono- und Dihydroxylverbindungen sowie basischen Verbindungen, wie Pyriding- oder Piperazinderivaten, erhalten werden.

Beim Einsatz dieser Materialien in Pigmentzubereitungen zeigen diese Systeme jedoch nur in ausgewählten Pigment-Bindemittelsystemen die gewünschten Verbesserungen, während in anderen Fällen zwar die Flockungsbeständigkeit verbessert werden kann, die Zugabe jedoch zu Glanzstörungen und Schleierbildungen im vernetzten Lackfilm führt.

Es wurde nun gefunden, daß beim Einsatz von polymeren Netzmitteln auf der Basis von Urethangruppen und gegebenenfalls Harnstoffgruppen aufweisenden Acrylpolymeren auch bei schwer benetzbaren Pigmenten und Farbstoffen durch die breiten Auswahlmöglichkeiten eine optimale Dispergierwirkung erzielt werden kann.

Die vorliegende Erfindung betrifft demgemäß polymere Netzmittel auf der Basis von Urethangruppen und gegebenenfalls Harnstoffgruppen aufweisenden Acrylcopolymeren, welche dadurch gekennzeichnet sind, daß sie aus

(A) 50 bis 80 Gew.-%, vorzugsweise 40 bis 70 Gew.-%, Urethangruppen aufweisenden Monomeren, die mindestens einen, gegebenenfalls Ethergruppen oder Estergruppen enthaltenden, aliphatischen Rest mit mindestens 8 C-Atomen aufweisen,

(B) bis zu 40 Gew.-%, vorzugsweise 20 bis 30 Gew.-%, Harnstoffgruppen und gegebenenfalls Urethangruppen aufweisenden Monomeren,

(C) bis zu 10 Gew.-%, vorzugsweise 2 - 5 Gew.-%, Amino-und/oder Hydroxylgruppen aufweisenden Monomeren, sowie

(D) bis zu 30 Gew.-%, vorzugsweise bis zu 20 Gew.-%, anderer, neben der Doppelbindung keine weiteren reaktionsfähigen Gruppen aufweisenden (Meth)acrylmonomeren und/oder aromatischen Vinyl- und/oder Vinylidenmonomeren

aufgebaut sind, wobei die Summe der Prozentzahlen 100 ergeben muß.

Die Erfindung betrifft weiterhin die Verwendung der polymeren Netzmittel in Pigmentzubereitungen für die Lackindustrie, sowie das Verfahren zur Herstellung der polymeren Netzmittel.

Als Urethangruppen aufweisende Monomere (A) sind insbesonders Reaktionsprodukte von Diisocyanaten geeignet. Dabei werden die Diisocyanate in einer ersten Stufe mit maximal äquimolaren Mengen eines (Meth)acrylsäurehydroxyalkylesters umgesetzt; die freigebliebenen Isocyanatgruppen werden dann mit einer monohydroxylfunktionellen Verbindung mit mindestens 8 C-Atomen umgesetzt.

Als Diisocyanate werden bevorzugt solche eingesetzt, die eine unterschiedliche Reaktivität der beiden NCO-Gruppen aufweisen, wie 2,4-Toluylendiisocyanat, Isophorondiisocyanat, Cyclohexylendiisocyanat oder substituierte Diphenylendiisocyanate. Selbstverständlich können im untergeordneten Ausmaß auch symmetrische Diisocyanate, wie das 2,6-Toluylendiisocyanat oder Hexamethylendiisocyanat verwendet werden.

Als (Meth)acrylsäurehydroxyalkylester dienen die handelsüblichen Ester der (Meth)acrylsäure mit Ethylenglykol und dessen Homologen.

Die so erhaltenen Monoisocyanatverbindungen werden weiter mit monohydroxylfunktionellen Verbindungen mit mindestens 8 C-Atomen umgesetzt, wobei die Mengenverhältnisse so gewählt werden, daß ein NCO-gruppenfreies Monomeres entsteht. Ein geringer Anteil eines Monoalkoholdiurethans ist für die Endprodukte ohne Bedeutung. Ein größerer Anteil des Diacrylurethans ist wegen der dadurch bedingten Vernetzungsmöglichkeit zu vermeiden.

Als Monohydroxylverbindungen dienen beispielsweise die n- bzw. iso-Formen des Octanols, Nonanols, Decanols etc. oder tert. Alkanolamine. Bevorzugt werden mono-hydroxylfunktionelle Polyester, wie sie z. B.

aus epsilon-Caprolacton und niederen Alkoholen erhalten werden, sowie Polyoxyalkylenglykolmonoalkylether mit einer Molmasse von 500 bis 800 eingesetzt.

Die Reaktion zur Herstellung dieser Urethanmonomeren erfolgt in einem isocyanatinerten Lösungsmittel durch langsame Zugabe des Hydroxyalkylesters zum Diisocyanat bei ca. 30°C. Gegebenenfalls kann die Reaktion durch geeignete Katalysatoren, z. B. Sn-Verbindungen, beschleunigt werden. Vorteilhafterweise erfolgt die Reaktion in Gegenwart eines Polymerisationsinhibitors, wie Hydrochinon. Nach Ende der Zugabe wird die Temperatur auf ca. 40 - 60°C erhöht und so lange gehalten, bis der berechnete NCO-Wert erreicht ist.

Die Umsetzung mit der monohydroxylfunktionellen Verbindung erfolgt anschließend unter den gleichen Bedingungen, wie sie oben angegeben sind, bis zu einem NCO-Wert von praktisch 0.

Die Harnstoffgruppen aufweisenden Monomeren (B) werden in gleicher Weise hergestellt, wobei in der zweiten Verfahrensstufe anstelle des Alkohols ein primäres oder ein sekundäres Amin, z. B. ein Dialkyl-, ein Alkylalkanol-, ein Dialkanolamin oder ein cyclisches Amin eingesetzt wird. Vorteilhafterweise weisen die Amine einen gegebenenfalls durch Ethergruppen, Estergruppen oder Aminogruppen unterbrochenen aliphatischen Rest mit mindestens 4 C-Atomen auf. Beispiele für solche Amine sind das Dibutylamin und seine Homologen, das Aminoethylethanolamin oder langkettige Monoamine mit Ethoxy oder Propoxygruppen, wie das handelsübliche JEFFAMINE (R) M-1000.

Als Ausgangsmaterial für die Monomeren der Gruppe (A) und (B) können auch Monomere wie das Isocyanatoethylmethacrylat und ähnliche handelsübliche Produkte verwendet werden.

Bei den Monomeren der Gruppe (C) handelt es sich um N-Vinylimidazol oder um die Ester der (Meth)-acrylsäure mit Aminoalkoholen. Vorzugsweise wird das Dimethylaminoethylmethacrylat oder das tert.-Butyl-amino-ethyl-methacrylat verwendet. Auch Umsetzungsprodukte von Glycidylmethacrylat mit Aminen können eingesetzt werden.

Bei den Monomeren der Gruppe (D) handelt es sich um die handelsüblichen (Meth)acrylsäureester mit Monoalkoholen sowie um die Vinylaromaten vom Typ des Styrols, p-Methylstyrols oder Vinyltoluols.

Die Copolymerisation erfolgt nach den üblichen Methoden der Lösungspolymerisation in Gegenwart radikalischer Initiatoren und gegebenenfalls Reglern.

Die Polymerisation soll zur Erzielung maximaler Eigenschaften des Netzmittels bis zu einer möglichst hohen (mittleren) Molmasse geführt werden. Die Grenzviskosität, als Maß für die mittlere Molmasse soll demgemäß Werte zwischen 20 und 60 ml/g (gemessen in CHCl₃/20°C) aufweisen.

Ein weiteres Verfahren zur Herstellung der erfindungsgemäßen polymeren Netzmittel ist durch eine polymeranaloge Umsetzung eines Hydroxylgruppen aufweisenden Copolymerisates mit den in entsprechender Weise halbblockierten Diisocyanaten gekennzeichnet. Die Ausgangsstoffe für diese Verfahrensvariation entsprechen den oben angeführten, wobei bei der Formulierung auf eine genügende Anzahl von Hydroxylgruppen im Copolymeren geachtet werden muß.

Die Pigmentzubereitungen werden durch Dispergierung der Pigmente und Farbstoffe in den erfindungsgemäßen polymeren Netzmitteln in den üblichen Aggregaten, wie Kugel-, Walzen-, Sand- oder Perlmühlen oder schnell-laufenden Dissolvern hergestellt. Zusammensetzung, richtige Auswahl der Mengenverhältnisse und der Verarbeitung sind dem Fachmann bekannt bzw. aus der Literatur zu entnehmen.

Die folgenden Beispiele erläutern die Erfindung, ohne sie in ihrem Umfang zu beschränken. Alle Angaben in Teilen und Prozenten, beziehen sich soferne nichts anderes angegeben ist, auf Gewichtseinheiten.

In den Beispielen werden folgende Abkürzungen für die Rohstoffe verwendet:

TDI    Toluylendiisocyanat (handelsübliches 80/20-Isomerengemisch)
IPDI    Isophorondiisocyanat
TMDI    Trimethylhexamethylendiisocyanat
HEA    Hydroxyethylacrylat
HEMA    Hydroxyethylmethacrylat
BMA    Butylmethacrylat
EHA    2-Ethylhexylacrylat
DAMA    Diethylaminoethylmethacrylat
PPA    Polyoxypropylenacrylat (Molmasse ca. 380)
PEGE    Polyethylenglykolmonomethylether (Molmasse ca. 500)
ST    Styrol
VIA    N-Vinylimidazol
IDCA    Isotridecylalkohol
DMEA    Dimethylethanolamin
CAP    hydroxylfunktioneller Polyester hergestellt durch Umsetzung von 92,8 Tlen epsilon-Caprolacton und 8,0 Tlen Nonanol in Gegenwart von 33 Tlen Xylol und 0,003 Tlen Dibutylzinndilaurat bei 160°C; 75%ige Lösung in Xylol

DBA    Di-n-butylamin
AEEA    N-Aminoethylethanolamin
DGDM    Diethylenglykoldimethylether
X   Xylol
MPD    N-Methylpyrrolidon
ABBN    Azobisisobutyronitril

(I) Herstellung der Urethan- bzw. Harnstoffgruppen aufweisenden Monomeren.

Die gewichtsmäßigen Ansätze, sowie die Reaktionsbedingungen für die Herstellung der Monomeren sind in der Tabelle 1 zusammengefaßt.

In einem geeigneten Reaktionsgefäß wird die Lösung des Diisocyanats im angegebenen Lösemittel vorgelegt und die Lösung des in üblicher Weise z. B. mit Hydrochinon stabilisierten Hydroxyalkyl(meth)-acrylats bei 25 bis 30°C gleichmäßig nach Maßgabe der Exothermie zugegeben. Nach Ende der Zugabe wird der Ansatz kurzzeitig auf 60°C erwärmt.

Nach Kühlen auf 30°C wird bei dieser Temperatur die Lösung der Monohydroxylverbindung bzw. des Amins im angegebenen Lösemittel gleichmäßig nach Maßgabe der Exothermie zugegeben. Die Reaktion wird dann bei 30°C bis zu einem NCO-Wert von praktisch 0 weitergeführt; gegebenenfalls kann die Temperatur bei der Nachreaktion auf 40 bis 60°C erhöht werden. Beim Einsatz von Mischungen von Monohydroxylverbindungen und tert. Hydroxyaminen wird zuerst die Hydroxylverbindung umgesetzt. Bei Erreichen des theoretischen NCO-Wertes wird mit dem Amin weiter umgesetzt.

## TAB 1

| | (Die Zahlenangaben beziehen sich auf Gew.-Teile) | | | |
|---|---|---|---|---|
| ,VP | DIISOCYANATLÖSUNG | HYDROXYACRYLATLÖSUNG | MONOHYDROXYL- BZW. AMINO VBDG. LÖSUNG | FESTKÖRPERGEHALT |
| 1 | 174 TDI<br>174 DGDM | 104 HEMA<br>104 DGDM | 600 PEGE<br>600 DGDM | 50 |
| 2 | 174 TDI<br>174 DGDM | 104 HEMA<br>104 DGDM | 425 PEGE<br>425 DGDM | 50 |
| 3 | 222 IPDI<br>222 DGDM | 92,8 HEA<br>92,8 DGDM | 200 IDCA<br>200 DGDM<br>17,8 DMEA<br>17,8 DGDM | 50 |
| 4 | 210 TMDI<br>210 X | 104 HEMA<br>104 X | 2900 CAP<br>1450 X<br>1450 X (1) | 50 |
| 5 | 174 TDI<br>174 X | 104 HEMA<br>104 X | 155 DBA<br>155 X | 50 |
| 6 | 222 IPDI<br>222 X | 92,8 HEA (2)<br>92,8 X | 51,6 DBA (3)<br>51,6 X<br>38,5 AEEA<br>38,5 MPD<br>7,7 DBA<br>7,7 MDP | 50 |

(1) Verdünnung nach Ende der Reaktion

(2) zusätzlich stabilisiert mit 0,2 Tlen Hydrochinon

(3) stufenweise Reaktion

EP 0 326 984 A2

(II) Herstellung der polymeren Netzmittel

Beispiele 1 bis 8:

Entsprechend den Mengenangaben in TAB. 2 wird in einem für die Herstellung von Lösungspolymerisaten geeigneten Reaktionsgefäß das als Reaktionsmedium dienende Lösemittel in einer Inertgasatmosphäre auf 80°C erwärmt. Bei dieser Temperatur wird das Monomerengemisch bzw. der Polymerisationsinitiator zugegeben. Anschließend wird die Temperatur noch 3 Stunden bei 80°C gehalten.

. ‑Das Copolymerisat wird mit dem weiters vorgesehenen Lösemittel auf den angegebenen Festkörpergehalt verdünnt.

Die Grenzviskosität des Endproduktes wird in (CHCl₃/20°C) gemessen.

TAB 2

| Beispiel | 1 | 2 | 3 | 4 | 5 | 6 | 7 | 8 |
|---|---|---|---|---|---|---|---|---|
| Polymerisationsmedium (Menge /Art) | 124 DGDM | 68/10 X/MPD | 100 MPD | 80 MPD | 100 MPD | 77 DGM | 55 MPD | 60 MPD |
| Monomerenmischung | Gew.-Teile | | | | | | | |
| BMA | 35 | 35 | 15 | -- | 15 | 65 | -- | -- |
| EHA | 35 | 35 | -- | -- | 15 | -- | -- | -- |
| DAMA | 5 | 5 | 5 | -- | -- | 5 | -- | -- |
| PPA | 5 | 5 | -- | -- | -- | -- | -- | -- |
| ST | -- | -- | ○ | -- | -- | -- | 5 | -- |
| VIA | -- | -- | -- | -- | -- | -- | -- | 10 |
| Monomer (A) VP 1(50 %) | 337,0 | -- | -- | -- | -- | -- | -- | -- |
| VP 2(50 %) | -- | 202 | -- | 40 | 30 | -- | -- | -- |
| VP 3(50 %) | -- | -- | -- | -- | -- | 286 | -- | -- |
| VP 4(50 %) | -- | -- | 120 | 100 | 100 | -- | 118 | 112 |
| Monomer (B) VP 5(50 %) | -- | 41,6 | -- | -- | -- | -- | -- | -- |
| VP 6(50 %) | -- | -- | 40 | 60 | 40 | -- | 72 | 68 |
| ABBN Gew.-Teile | 1 | 1 | 0,5 | 0,5 | 0,5 | 2 | 2 | 2 |
| Verdünnung Lösemittel Gew.-Teile | 286 DGDM | 270 X | 53 MPD | 53 MPD | 50 MPD | 275 DGM | 80 MPD | 80 MPD |
| Festkörpergehalt % | 30 | 30 | 30 | 30 | 30 | 30 | 30 | 30 |
| spezif. Viskosität ml/g | 56 | 58 | 32 | 25 | 40 | 35 | 35 | 27 |

Beispiel 9: (Polymeranaloge Umsetzung von hydroxylgruppenhaltigen Copolymeren mit einseitig blokkierten Diisocyanaten)

In einem für die Herstellung von Lösungspolymerisaten geeigneten Reaktionsgefäß werden 100 Tle DGDM auf 75°C erhitzt. Innerhalb von 2 Stunden wird eine Mischung aus 35 Tlen BMA, 35 Tlen EHA, 20 Tlen HEMA, 5 Tlen PPA, 5 Tlen DAMA und 1 Tl ABBN zugegeben und die Reaktion anschließend nach Zugabe von 0,2 Tlen ABBN zu einem Polymerisationsumsatz von praktisch 100 % weitergeführt.

200 Tle des so hergestellten Copolymeren (50%ig) werden mit 163 Tlen einer 50%igen Lösung in DGDM eines mit Monomethoxytetraethylenglykol halbblockierten Toluylendiioscyanats in Gegenwart von 242 Tlen DGDM bei 30°C bis zu einem NCO-Wert von 0 umgesetzt.

Der Ansatz wird mit DGDM auf einen Festkörpergehalt von 30 % eingestellt. Das Produkt weist eine Grenzviskosität von 42,2 ml/g (CHCl₃/20°C) auf.

Zur Prüfung der erfindungsgemäßen polymeren Netzmittel werden Einbrennlacke mit verschiedenen Pigmenten hergestellt. Die Lacke wurden auf eine Viskosität (DIN 53211/20°C) von ca. 20 Sekunden verdünnt, durch Gießen auf Glasplatten appliziert und eingebrannt. Glanz- und Verlauf der Lackierung wurden mittels Gonioreflektometer bestimmt. Als Lackbindemittel wurde eine Alkydharze-Melaminharz-Kombination eingesetzt, wie sie für Automobil-Decklacke verwendet wird. Die Zusammensetzung der Lacke und die Prüfergebnisse sind in der Tabelle 3 zusammengefaßt.

Verwendete Materialien:

Alkyd I: Nichttrocknendes Alkydharz, 45 % synthetische Fettsäuren; Säurezahl 6 - 15 mg KOH/g; Lieferform: 70%ig in aromatenreichem Lacklösemittel

Alkyd II: Trocknendes Alkydharz, 35 % dehydratisiertes Rizinusöl: Säurezahl 20-30 mg KOH/g; Lieferform: 60%ig in aromatenreichem Lacklösemittel

Melaminharz: Hochreaktives Melaminharz, Isobutanoltyp; Lieferform: 55%ig in Isobutanol

Lösemittel A 150 : aromatenreiches Lacklösemittel

BUGL: Ethylenglykolmonobutylether

Verlaufmittel: handelsübliches, silikonfreies Verlaufmittel

Pigmente:

Colour Index Nr. P.R. 122 : HOSTAPERMROSA E

Chinacridonpigment

P.R. 177 : CHROMOPHTHALROT A3B

Anthrachinonpigment

P.Y. 108 : PALIOGENGELB L 1560

Anthrapyrimidingelb

Vergleich: Als Vergleichsmaterial wurde ein handelsübliches Pigmentbenetzungsmittel eingesetzt.

Die mit * bezeichneten Lacke 3, 6 und 9 sind Vergleichslacke ohne Verwendung eines Netzmittels.

TAB 3

| Lack Nr. | 1 | 2 | 3* | 4 | 5 | 6* | 7 | 8 | 9* | 10 | 11 | 12 |
|---|---|---|---|---|---|---|---|---|---|---|---|---|
| Pigmentpaste Alkyd I | 100 | 100 | 100 | 100 | 100 | 100 | 100 | 100 | 100 | 100 | 100 | 100 |
| A 150 | 37,3 | 37,3 | 37,3 | 37,3 | 37,3 | 37,3 | 37,3 | 37,3 | 37,3 | 37,3 | 37,3 | 37,3 |
| P.R. 122 | 30 | 30 | 30 | | | | | | | 30 | | |
| P.R. 177 | | | | 12 | 12 | 12 | | | | | 12 | |
| P.Y. 108 | | | | | | | 30 | 30 | 30 | | | 30 |
| Verlaufmittel | 0,3 | 0,3 | 0,3 | 0,3 | 0,3 | 0,3 | 0,3 | 0,3 | 0,3 | 0,3 | 0,3 | 0,3 |
| Erf.gem.Netzmittel Beispiel 1, 30 % | 20 | | | | | | 18 | | | | | |
| Beispiel 2, 30 % | | | | 8,0 | | | | | | | | |
| Beispiel 8, 30 % | | | | | | | | | | 15 | 6,0 | 12 |
| Vergleich, 30 % | | 20 | | | 8,0 | | | 18 | | | | |
| Lack Pigmentpaste (s.o.) | 18,7 | 18,7 | 16,7 | 47,8 | 47,8 | 47,1 | 2,5 | 22;5 | 20,6 | 17,7 | 47,6 | 21,9 |
| Alkyd I | 39,7 | 39,7 | 39,7 | 25,1 | 25,1 | 25,1 | 37,4 | 37,4 | 37,4 | 39,7 | 25,1 | 37,4 |
| Alkyd II | 9,6 | 9,6 | 9,6 | 9,6 | 9,6 | 9,6 | 9,6 | 9,6 | 9,6 | 9,6 | 9,6 | 9,6 |
| Melaminharz | 31,6 | 31,6 | 31,6 | 31,6 | 31,6 | 31,6 | 31,6 | 31,6 | 31,6 | 31,6 | 31,6 | 31,6 |
| A 150 | 18,0 | 18,0 | 18,0 | 23,4 | 23,4 | 23,4 | 21,0 | 21,0 | 21,0 | 18,0 | 23,4 | 21,0 |
| BUGL | 12,0 | 12,0 | 12,0 | 15,6 | 15,6 | 15,6 | 14,0 | 14,0 | 14,0 | 12,0 | 15,6 | 14,0 |
| Glanzwert | 75 | 66 | 54 | 95 | 70 | 21 | 83 | 48 | 12 | 81 | 94 | 85 |
| Verlaufzeit | 2,36 | 2,14 | 1,44 | 2,70 | 2,45 | 1,66 | 2,36 | 2,00 | 1,96 | 2,37 | 2,72 | 2,40 |

EP 0 326 984 A2

Lacke 1a, 1b, 1c: In der Rezeptur für Lack 1 wurde das Netzmittel durch die entsprechende Menge Beispiel 3, 5 und 9 ersetzt. Es werden praktisch die gleichen Meßwerte erhalten (Abweichung ± 3 bzw. ± 0,05)

Lacke 4a, 4b, 4c: In der Rezeptur für Lack 4 wurde das Netzmittel durch die entsprechende Menge Beispiel 4, 5 und 9 ersetzt. Es werden praktisch die gleichen Meßwerte erhalten (Abweichung ± 2 bzw. ± 0,03)

Lacke 7a, 7b, 7c; 7d, 7e: In der Rezeptur für Lack 7 wurde das Netzmittel durch die entsprechende Menge Beispiel 2, 4, 5, 6 und 7 ersetzt. Es werden praktisch die gleichen Meßwerte erhalten (Abweichung ± 5 bzw. ± 0,05).


## Ansprüche

1. Polymere Netzmittel auf der Basis von Urethangruppen und gegebenenfalls Harnstoffgruppen aufweisenden Acrylcopolymeren, dadurch gekennzeichnet, daß sie aus

(A) 50 bis 80 Gew.-%, vorzugsweise 40 bis 70 Gew.-%, Urethangruppen aufweisenden Monomeren, die mindestens einen, gegebenenfalls Ethergruppen oder Estergruppen enthaltenden, aliphatischen Rest mit mindestens 8 C-Atomen aufweisen,

(B) bis zu 40 Gew.-%, vorzugsweise 20 bis 30 Gew.-%, Harnstoffgruppen und gegebenenfalls Urethangruppen aufweisenden Monomeren,

(C) bis zu 10 Gew.-%, vorzugsweise 2 - 5 Gew.-%, Amino- und/oder Hydroxylgruppen aufweisende Monomeren, sowie

(D) bis zu 30 Gew.-%, vorzugsweise bis zu 20 Gew.-%, anderer, neben der Doppelbindung keine weiteren reaktionsfähigen Gruppen aufweisenden (Meth)acrylmonomeren und/oder aromatischen Vinyl- und/oder Vinylidenmonomeren

aufgebaut sind, wobei die Summe der Prozentzahlen 100 ergeben muß.

2. Polymere Netzmittel nach Anspruch 1, dadurch gekennzeichnet, daß sie als Monomere (A) bzw. (B) Umsetzungsprodukte von equimolaren Mengen eines Diisocyanates mit jeweils einem Hydroxyalkyl(meth)-acrylat und einer Monohydroxylverbindung mit mindestens 8 C-Atomen bzw. einem primären und/oder sekundären Amin enthalten.

3. Polymere Netzmittel nach Anspruch 1, dadurch gekennzeichnet, daß sie als Monomere (A) bzw. (B) Umsetzungsprodukte des Isocyanatoethyl(meth)acrylates mit Monohydroxylverbindungen mit mindestens 8 C-Atomen bzw. einem primären und/oder sekundären Amin enthalten.

4. Polymere Netzmittel nach Anspruch 1, dadurch gekennzeichnet, daß sie als Monomerkomponente (C) N-Vinylimidazol enthalten.

5. Verfahren zur Herstellung von polymeren Netzmitteln nach Anspruch 1, dadurch gekennzeichnet, daß man

(A) 50 bis 80 Gew.-%, vorzugsweise 40 bis 70 Gew.-%, Urethangruppen aufweisende Monomeren, die mindestens einen, gegebenenfalls Ethergruppen oder Estergruppen enthaltenden, aliphatischen Rest mit mindestens 8 C-Atomen aufweisen,

(B) bis zu 40 Gew.-%, vorzugsweise 20 bis 30 Gew.-%, Harnstoffgruppen und gegebenenfalls Urethangruppen aufweisende Monomeren,

(C) bis zu 10 Gew.-%, vorzugsweise 2 - 5 Gew.-%, Amino- und/oder Hydroxylgruppen aufweisende Monomeren, sowie

(D) bis zu 30 Gew.-%, vorzugsweise bis zu 20 Gew.-%, anderer, neben der Doppelbindung keine weiteren reaktionsfähigen Gruppen aufweisende (Meth)acrylmonomeren und/oder aromatische Vinyl- und/oder Vinylidenmonomeren,

wobei die Summe der Prozentzahlen 100 ergibt, in einem Lösemittel in Gegenwart radikalischer Initiatoren und gegebenenfalls Reglern, bis zu einer Grenzviskosität, gemessen in Chloroform bei 20 °C, von 20 bis 60 ml/g, polymerisiert.

6. Verfahren nach Anspruch 5, dadurch gekennzeichnet, daß man als Monomerkomponente (A) ein Umsetzungsprodukt eines mit einem Hydroxyalkyl(meth)acrylat halbblockierten Diisocyanats mit einem aliphatischen Monoalkohol mit mindestens 8 C-Atomen und/oder einem tertiären Alkanolamin und/oder einem Polyoxyalkylenglykolmonoalkylether und/oder einem epsilon-Alkanol-polyester einsetzt.

7. Verfahren nach Anspruch 5, dadurch gekennzeichnet, daß man als Monomerkomponente (B), ein Umsetzungsprodukt eines mit einem Hydroxyalkyl(meth)acrylat halbblockierten Diisocyanats mit einer primären und/oder sekundären Aminoverbindung, welche einen, gegebenenfalls durch Ethergruppen, Estergruppen oder Aminogruppen unterbrochenen aliphatischen Rest aufweist, einsetzt.

8. Verfahren nach Anspruch 5, dadurch gekennzeichnet, daß man zur Einführung der Urethangruppen ein Hydroxylgruppen aufweisendes Acrylcopolymerisat entsprechender Zusammensetzung mit halbblockierten Diisocyanaten umsetzt, wobei als Blockierungsmittel eine mindestens 8 C-Atome, sowie gegebenenfalls Ether- oder Estergruppen aufweisende Monohydroxylverbindung, eingesetzt wird.

9. Verfahren nach Anspruch 5, dadurch gekennzeichnet, daß man als Monomerkomponente (C) N-Vinylimidazol einsetzt.

10. Verwendung der polymeren Netzmittel nach Anspruch 1, in Pigmentzubereitungen für die Lackindustrie.